# EUROPEAN PATENT APPLICATION

(11) **EP 4 422 227 A1**
(43) Date of publication of application: **28.08.2024**
(21) Application number: 21960984.9
(22) Date of filing: 21.10.2021
(51) Int. Cl.: H04W 4/70

(54) **DIRECT COMMUNICATION METHOD AND APPARATUS, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2021/125377
(87) International publication number: WO 2023/065235

(57) **Abstract**

The present disclosure relate to a direct communication method and apparatus, and a storage medium. The direct communication method is applied to a first terminal and comprises: receiving a direct communication resource scheduled by a network device; and transmitting indication information, wherein the indication information is used for indicating a usage condition of the direct communication resource. According to the present disclosure, the network device subsequently accurately schedules the direct communication resource.

## Description

### TECHNICAL FIELD

The present disclosure relates to the field of communication technologies, and particularly to a method and an apparatus for sidelink communication, and a storage medium.

### BACKGROUND

Since Long Term Evolution (LTE), the Third Generation Partnership (3GPP) has been formulating a sidelink standard as a standard for terminal-to-terminal sidelink communication.

With respect to the sidelink communication, in order to save a power consumption of a sidelink terminal, sidelink discontinuous reception (DRX) is introduced in R17. For broadcast and groupcast, a sidelink DRX configuration of a receiving terminal is decided according to a service type, including a timer and a cycle. For unicast, the sidelink DRX configuration of the receiving terminal is configured by a sending terminal or a network device for a sending terminal.

In the related art, for the sidelink DRX, the sending terminal is configured with a sidelink sending resource for sending sidelink data. The sending terminal sends the sidelink data within an active time of the receiving terminal to prevent data loss. The receiving terminal monitors a physical sidelink control channel (PSCCH) within the active time, to achieve energy saving. If the sending terminal determines that there is no receiving terminal being in the active time, the sending terminal will discard the configured sending resource.

However, for sidelink DRX communication controlled by the network device, the network device cannot clarify whether the sending terminal sends the data based on the configured sidelink sending resource, which may lead to wrong scheduling of a sidelink terminal.

### SUMMARY

A method and an apparatus for sidelink communication, and a storage medium are provided in embodiments of the present disclosure to overcome problems existing in the related art.

According to a first aspect of embodiments of the present disclosure, there is provided a method for sidelink communication. The method is applied to a first terminal, and includes:
receiving a sidelink communication resource scheduled by a network device; and sending indication information configured to indicate a use condition of the sidelink communication resource.

In an implementation, the method further includes: in response to determining there is no second terminal being in an active time among second terminals performing a sidelink communication with the first terminal, not using the sidelink communication resource; in which the indication information is configured to indicate not using the sidelink communication resource.

In an implementation, the indication information includes a hybrid automatic repeat request (HARQ) process ID;
the HARQ process ID is an HARQ process ID included in downlink control information (DCI) scheduling the unused sidelink communication resource.

In an embodiment, the indication information includes a first bit map, and there is a corresponding relationship between a bit in the first bit map and the HARQ process ID; a bit value after setting the bit in the first bit map is configured to indicate the unused sidelink communication resource.

In an implementation, the indication information is further configured to indicate a retransmission position corresponding to the unused sidelink communication resource, and there is a corresponding relationship between the retransmission position and a retransmission number of times.

In an embodiment, the indication information includes a second bit map, and there is a corresponding relationship between a bit in the second bit map and a retransmission position; a bit value after setting the bit in the second bit map is configured to indicate the retransmission position.

In an implementation, the method further includes: in response to the network device configuring a physical uplink control channel (PUCCH) for the sidelink communication resource, sending an HARQ acknowledgement feedback for a data transmission based on the sidelink communication resource.

In an implementation, the method further includes: in response to the network device configuring a physical uplink control channel (PUCCH) for the sidelink communication resource, and in response to performing an initial transmission based on the sidelink communication resource, sending an HARQ acknowledgement feedback for a data transmission based on the sidelink communication resource.

In an implementation, the method further includes: in response to the network device configuring a physical uplink control channel (PUCCH) for the sidelink communication resource, and in response to performing a retransmission based on the sidelink communication resource, sending an HARQ negative acknowledgement feedback for a data transmission based on the sidelink communication resource.

In an implementation, the method further includes: receiving a sidelink communication resource scheduled by the network device within a next active time.

In an implementation, the method further includes: in response to determining that there is a second terminal being in an active time among second terminals performing sidelink communication with the first terminal, sending sidelink communication data to the second terminal being in the active time using the sidelink communication resource; in which the indication information is configured to indicate resource information of using the sidelink communication resource.

In an implementation, the resource information includes at least one of:
an ID of a layer 2 of the second terminal; a logical channel corresponding to the sidelink communication data sent; or starting by the first terminal a sidelink communication HARQ feedback, or not starting by the first terminal a sidelink communication HARQ feedback.

In an implementation, the method further includes: receiving a sidelink communication resource scheduled by the network device within the active time determined based on the resource information.

According to a second aspect of embodiments of the present disclosure, there is provided a method for sidelink communication. The method is applied to a network device, and includes:
scheduling a sidelink communication resource; and receiving indication information configured to indicate a use condition of the sidelink communication resource.

In an implementation, the indication information is configured to indicate a sidelink communication resource not used by a terminal.

In an implementation, the indication information includes a hybrid automatic repeat request (HARQ) process ID; and the HARQ process ID is an HARQ process ID included in downlink control information (DCI) scheduling the unused sidelink communication resource.

In an embodiment, the indication information includes a first bit map, and there is a corresponding relationship between a bit in the first bit map and the HARQ process ID; a bit value after setting the bit in the first bit map is configured to indicate the unused sidelink communication resource.

In an implementation, the indication information is further configured to indicate a retransmission position corresponding to the unused sidelink communication resource, and there is a corresponding relationship between the retransmission position and a retransmission number of times.

In an embodiment, the indication information includes a second bit map, and there is a corresponding relationship between a bit in the second bit map and a retransmission position; a bit value after setting the bit in the second bit map is configured to indicate the retransmission position.

In an implementation, the method further includes: in response to configuring a physical uplink control channel (PUCCH) for the sidelink communication resource, receiving an HARQ acknowledgement feedback from the terminal for a data transmission based on the sidelink communication resource.

In an implementation, the method further includes: in response to configuring a physical uplink control channel (PUCCH) for the sidelink communication resource, receiving an HARQ acknowledgement feedback from the terminal for an initial data transmission based on the sidelink communication resource.

In an implementation, the method further includes: in response to configuring a physical uplink control channel (PUCCH) for the sidelink communication resource, receiving an HARQ negative acknowledgement feedback from the terminal for a data retransmission based on the sidelink communication resource.

In an implementation, the method further includes: scheduling the sidelink communication resource within a next active time.

In an implementation, the indication information is configured to indicate resource information of using the sidelink communication resource.

In an implementation, the resource information includes at least one of:
an ID of a layer 2 of a second terminal; a logical channel corresponding to sidelink communication data sent; or starting by the first terminal a sidelink communication HARQ feedback, or not starting by the first terminal a sidelink communication HARQ feedback.

In an implementation, the method further includes:
determining an active time based on the resource information; and scheduling a sidelink communication resource within the active time determined based on the resource information.

According to a third aspect of embodiments of the present disclosure, there is provided an apparatus for sidelink communication. The apparatus includes:
a receiving unit, configured to receive a sidelink communication resource scheduled by a network device; and a sending unit, configured to send indication information configured to indicate a use condition of the sidelink communication resource.

In an implementation, the apparatus for sidelink communication further includes a processing unit. The processing unit is configured to: in response to determining that there is no second terminal being in an active time among second terminals performing sidelink communication with the first terminal, not use the sidelink communication resource; in which the indication information is configured to indicate not using the sidelink communication resource.

In an implementation, the indication information includes a hybrid automatic repeat request (HARQ) process ID; and the HARQ process ID is an HARQ process ID included in downlink control information (DCI) scheduling the unused sidelink communication resource.

In an embodiment, the indication information includes a first bit map, and there is a corresponding relationship between a bit in the first bit map and the HARQ process ID; a bit value after setting the bit in the first bit map is configured to indicate the unused sidelink communication resource.

In an implementation, the indication information is further configured to indicate a retransmission position corresponding to the unused sidelink communication resource, and there is a corresponding relationship between the retransmission position and a retransmission number of times.

In an embodiment, the indication information includes a second bit map, and there is a corresponding relationship between a bit in the second bit map and a retransmission position; a bit value after setting the bit in the second bit map is configured to indicate the retransmission position.

In an implementation, the sending unit is further configured to: in response to the network device configuring a physical uplink control channel (PUCCH) for the sidelink communication resource, send an HARQ acknowledgement feedback for a data transmission based on the sidelink communication resource.

In an implementation, the sending unit is further configured to: in response to the network device configuring a physical uplink control channel (PUCCH) for the sidelink communication resource, and in response to performing an initial transmission based on the sidelink communication resource, send an HARQ acknowledgement feedback for a data transmission based on the sidelink communication resource.

In an implementation, the sending unit is further configured to: in response to the network device configuring a physical uplink control channel (PUCCH) for the sidelink communication resource, and in response to performing a retransmission based on the sidelink communication resource, send an HARQ negative acknowledgement feedback for a data transmission based on the sidelink communication resource.

In an implementation, the receiving unit is further configured to: receive a sidelink communication resource scheduled by the network device within a next active time.

In an implementation, the sending unit is further configured to: in response to determining that there is a second terminal being in an active time among second terminals performing sidelink communication with the first terminal, send sidelink communication data to the second terminal being in the active time using the sidelink communication resource; in which the indication information is configured to indicate resource information of using the sidelink communication resource.

In an implementation, the resource information includes at least one of:
an ID of a layer 2 of a second terminal; a logical channel corresponding to sidelink communication data sent; or starting by the first terminal starts a sidelink communication HARQ feedback, or not starting by the first terminal a sidelink communication HARQ feedback.

In an implementation, the receiving unit is further configured to: receive a sidelink communication resource scheduled by the network device within the active time determined based on the resource information.

According to a fourth aspect of embodiments of the present disclosure, there is provided an apparatus for sidelink communication. The apparatus includes:
a scheduling unit, configured to schedule a sidelink communication resource; and a receiving unit, configured to receive indication information configured to indicate a use condition of the sidelink communication resource.

In an implementation, the indication information is configured to indicate a sidelink communication resource not used by a terminal.

In an implementation, the indication information includes a hybrid automatic repeat request (HARQ) process ID; and the HARQ process ID is an HARQ process ID included in downlink control information (DCI) scheduling the unused sidelink communication resource.

In an embodiment, the indication information includes a first bit map, and there is a corresponding relationship between a bit in the first bit map and the HARQ process ID; a bit value after setting the bit in the first bit map is configured to indicate the unused sidelink communication resource.

In an implementation, the indication information is further configured to indicate a retransmission position corresponding to the unused sidelink communication resource, and there is a corresponding relationship between the retransmission position and a retransmission number of times.

In an embodiment, the indication information includes a second bit map, and there is a corresponding relationship between a bit in the second bit map and a retransmission position; a bit value after setting the bit in the second bit map is configured to indicate the retransmission position.

In an implementation, the receiving unit is further configured to: in response to configuring a physical uplink control channel (PUCCH) for the sidelink communication resource, receive an HARQ acknowledgement feedback from the terminal for a data transmission based on the sidelink communication resource.

In an implementation, the receiving unit is further configured to: in response to configuring a physical uplink control channel (PUCCH) for the sidelink communication resource, receive an HARQ acknowledgement feedback from the terminal for an initial data transmission based on the sidelink communication resource.

In an implementation, the receiving unit is further configured to: in response to configuring a physical uplink control channel (PUCCH) for the sidelink communication resource, receive an HARQ negative acknowledgement feedback from the terminal for a data retransmission based on the sidelink communication resource.

In an implementation, the scheduling unit is further configured to: schedule a sidelink communication resource within a next active time.

In an implementation, the indication information is configured to indicate resource information of using the sidelink communication resource.

In an implementation, the resource information includes at least one of:
an ID of a layer 2 of a second terminal; a logical channel corresponding to sidelink communication data sent; or starting by the first terminal a sidelink communication HARQ feedback, or not starting by the first terminal a sidelink communication HARQ feedback.

In an implementation, the scheduling unit is further configured to: determine an active time based on the resource information; and schedule a sidelink communication resource within the active time determined based on the resource information.

According to a fifth aspect of embodiments of the present disclosure, there is provided a device for sidelink communication. The device includes:
a processor; and
a memory for storing instructions executable by a processor;
in which the processor is configured to perform the method for sidelink communication according to the first aspect or any one implementation of the first aspect.

According to a sixth aspect of embodiments of the present disclosure, there is provided a device for sidelink communication. The device includes:
a processor; and
a memory for storing instructions executable by a processor;
in which the processor is configured to perform the method for sidelink communication according to the second aspect or any one implementation.

According to a seventh aspect of embodiments of the present disclosure, there is provided a storage medium storing instructions. When the instructions in the storage medium are executed by a processor of a terminal, the terminal is caused to perform the method for sidelink communication in the first aspect or any one implementation of the first aspect.

According to an eighth aspect of embodiments of the present disclosure, there is provided a storage medium storing instructions. When the instructions in the storage medium are executed by a processor of a network device, the network device is caused to perform the method for sidelink communication in the second aspect or any implementation of the second aspect.

The technical solution according to the embodiments of the present disclosure can include the following beneficial effect: the terminal receives the sidelink communication resource scheduled by the network device, and sends the indication information to indicate the use condition of the sidelink communication resource received, so that the network device accurately schedules the sidelink communication resource.

It should be noted that, the details above and in the following are exemplary and illustrative, and do not constitute the limitation on the present disclosure.

### BRIEF DESCRIPTION OF THE DRAWINGS

The drawings herein are incorporated into the specification and constitute a part of the specification, show embodiments in conformity with the present disclosure, and explain the principle of the present disclosure together with the specification.
FIG. 1 is a diagram illustrating a wireless communication system according to an example embodiment.
FIG. 2 is a flowchart illustrating a method for sidelink communication according to an example embodiment.
FIG. 3 is a flowchart illustrating a method for sidelink communication according to an example embodiment.
FIG. 4 is a flowchart illustrating a method for sidelink communication according to an example embodiment.
FIG. 5 is a flowchart illustrating a method for sidelink communication according to an example embodiment.
FIG. 6 is a flowchart illustrating a method for sidelink communication according to an example embodiment.
FIG. 7 is a flowchart illustrating a method for sidelink communication according to an example embodiment.
FIG. 8 is a block diagram illustrating an apparatus for sidelink communication according to an example embodiment.
FIG. 9 is a block diagram illustrating an apparatus for sidelink communication according to an example embodiment.
FIG. 10 is a block diagram illustrating a device for sidelink communication according to an example embodiment.
FIG. 11 is a block diagram illustrating a device for sidelink communication according to an example embodiment.

### DETAILED DESCRIPTION

Example embodiments will be described here, and examples thereof are shown in attached drawings. When the following descriptions refer to the accompanying drawings, same numbers in different drawings represent same or similar elements unless otherwise indicated. The implementations described in the following exemplary embodiments do not represent all possible implementations consistent with the present disclosure. Rather, they are merely examples of apparatuses and methods consistent with some aspects of the disclosure as detailed in the appended claims.

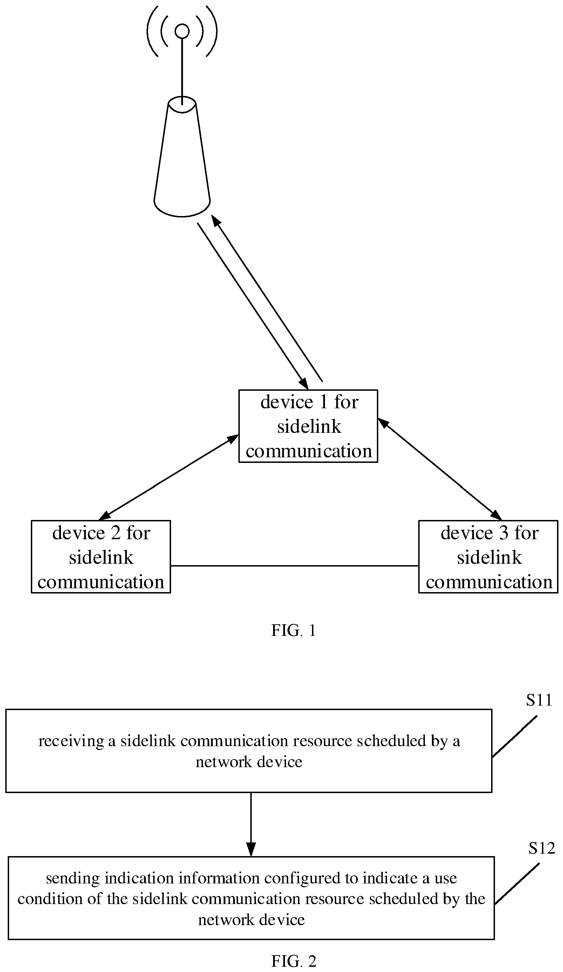

The method for sidelink communication in embodiments of the present disclosure is applicable to a system for sidelink communication as illustrated in FIG. 1. As illustrated in FIG. 1, a network device configures transmission parameters for data transmission for a device 1 for sidelink communication. The device 1 for sidelink communication, a device 2 for sidelink communication and a device 3 for sidelink communication perform sidelink communication. Communication links between the network device and the sidelink device are an uplink and a downlink, and a link between a sidelink communication device and a sidelink communication device is a sidelink.

In the present disclosure, a scenario of sidelink communication between sidelink communication devices may be a vehicle to everything (V2X) service scenario. V represents a vehicle-mounted device, and X represents any object that interacts with the vehicle-mounted device. The X mainly includes a vehicle-mounted device, a handheld device, a traffic side infrastructure and a network. Information patterns of V2X interaction include vehicle to vehicle (V2V) interaction, vehicle to infrastructure (V2I) interaction, vehicle to pedestrian (V2P) interaction, and vehicle to network (V2N) interaction.

With the development of a new generation of 5G mobile communication technology, a 5G NR technology is used in 3 GPP Rel-16 to support new V2X communication services and scenarios, such as vehicles platooning, extended sensors, advanced driving and remote driving. In general, a 5G V2X sidelink may provide a higher communication rate, a shorter communication delay, and a more reliable communication quality.

A scenario of sidelink communication between sidelink communication devices may be a device to device (D2D) communication scenario. The sidelink communication device for direct communication in the embodiments of the present disclosure may include various handheld devices with a wireless communication function, vehicle devices, wearable devices, computing devices or other processing devices connected to wireless modems, as well as various forms of user equipments (UE), mobile stations (MS), terminals, terminal equipments, etc. The embodiments of the present disclosure are illustrated by taking a sidelink communication device being a terminal for an example. A terminal, a sidelink UE and a sidelink terminal involved in the following embodiments may be understood as sidelink communication devices. Those skilled in the art may understand consistency of meanings of the above terms. Further, a terminal in sidelink communication includes a sending terminal and a receiving terminal for sidelink communication.

In order to save a power consumption of a sidelink terminal, sidelink discontinuous reception (DRX) is introduced in R17. For broadcast and groupcast, a sidelink DRX configuration of a receiving terminal is decided according to a service type, including a timer and a cycle. For unicast, the sidelink DRX configuration of the receiving terminal is configured by the sending terminal or a network device for the sending terminal.

In the related art, for the sidelink DRX, the sending terminal is configured with a sidelink sending resource for sending sidelink data. There are two manners for allocating the sidelink sending resource in the sidelink communication, one is a manner of dynamic scheduling by the network, and the other is a manner of autonomous selecting by the sending terminal in a resource pool of a network broadcast. In the dynamic scheduling manner, the network device reports and dynamically allocates the sidelink sending resource to the terminal according to cache data of the terminal. In the autonomous selection manner, the terminal itself randomly selects the sidelink sending resource in the network broadcast or a preconfigured resource pool.

The sending terminal sends the sidelink data based on the sidelink sending resource within an active time of the receiving terminal to prevent data loss. The receiving terminal monitors a physical sidelink control channel (PSCCH) within the active time, to achieve energy saving. If the sending terminal determines that there is no receiving terminal being in the active time, the sending terminal will not use the sidelink sending resource to send sidelink data.

However, for the sidelink DRX communication controlled by the network device, the network device cannot clarify whether the sending terminal may send the sidelink data based on the configured sidelink sending resource, which may further lead to wrong scheduling of a sidelink terminal. For example, if the sending terminal receives the sidelink sending resource scheduled by the base station, but there is no any receiving terminal being in the active time, the receiving terminal will discard the sidelink sending resource scheduled by the base station. However, the base station does not know the terminal has discarded the sending resource permission. Therefore, the base station may further schedule a sidelink sending resource, so that subsequent sending resources are discarded, resulting in a waste of resources.

For this purpose, a method for sidelink communication applied to a DRX configuration is provided according to the embodiments of the disclosure. The sending terminal receives a sidelink communication resource scheduled by the network device, such as the sidelink sending resource, and sends indication information about whether the sidelink communication resource is used to the network device, to avoid that the network device wrongly schedules the scheduled sidelink communication resource. For example, the unused sidelink communication resource is avoided being scheduled within an inactive time, and further a waste of resources is avoided.

In the embodiments of the present disclosure, for convenience of description, terminals for sidelink communication are referred to a first terminal and a second terminal. The first terminal may be understood as a sending terminal for sidelink communication. The second terminal may be understood as a receiving terminal for sidelink communication.

It may be understood that, in embodiments of the disclosure, the sidelink communication resource scheduled by the network device for the first terminal may be a sidelink sending resource.

FIG. 2 is a flowchart illustrating a method for sidelink communication according to an example embodiment. As illustrated in FIG. 2, the method for sidelink communication is applied in a first terminal, and includes following steps.

At step S11, a sidelink communication resource scheduled by a network device is received.

At step S12, indication information is sent, the indication information is configured to indicate a use condition of the sidelink communication resource scheduled by the network device.

In the embodiments of the disclosure, in response to the terminal receiving the sidelink communication resource scheduled by the network device, the use condition of the sidelink communication resource scheduled is sent to the network device, so that the network device performs accurate scheduling based on the use condition of the sidelink communication resource, which avoids that the network device wrongly schedules the scheduled sidelink communication resource.

In the embodiments of the present disclosure, for convenience of description, a first terminal and a second terminal for sidelink communication perform sidelink communication based on DRX. The second terminal monitors a physical sidelink control channel (PSCCH) within an active time of the DRX. The first terminal determines that there is a second terminal being in the active time within the active time, and sends sidelink data using the scheduled sidelink communication resource. The first terminal determines that there is no second terminal being in the active time, and not uses the scheduled sidelink communication resource.

In an implementation, there may be one or more second terminals performing sidelink communication with the first terminal. In response to the first terminal determining there is no second terminal being in the active time among the second terminals performing sidelink communication with the first terminal, the first terminal does not use the sidelink communication resource scheduled, and the indication information sent to the network device is configured to indicate not using the sidelink communication resource.

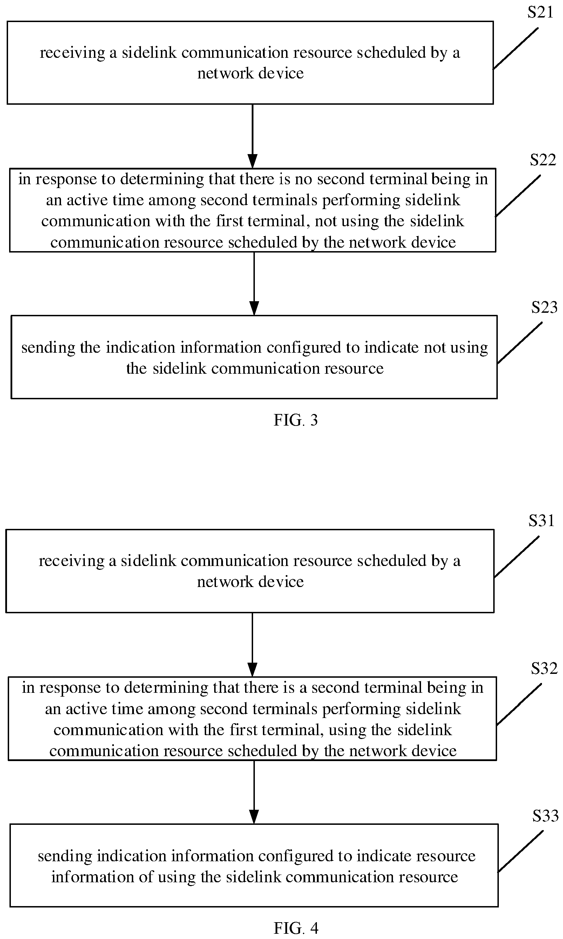

FIG. 3 is a flowchart illustrating a method for sidelink communication according to an example embodiment. As illustrated in FIG. 3, the method for sidelink communication is applied in a first terminal, and includes following steps.

At step S21, a sidelink communication resource scheduled by a network device is received.

At step S22, in response to determining that there is no second terminal being in an active time among second terminals performing sidelink communication with the first terminal, the sidelink communication resource scheduled by the network device is not used.

In the embodiments of the disclosure, there is no second terminal being in the active time among the second terminals performing the sidelink communication with the first terminal, which may be understood that there is no any second terminal being in the active time within a time during which the sidelink communication resource scheduled by the network device performs data transmission.

In an example, the first terminal does not use the sidelink communication resource scheduled by the network device, and for example, may discard the scheduled sidelink communication resource. For example, if there is no any receiving UE being in the active time within a time for the sidelink sending resource scheduled by the base station, the UE will discard the sidelink sending resource.

At step S23, the indication information configured to indicate not using the sidelink communication resource is sent.

In embodiments of the disclosure, in response to the first terminal determining there is no second terminal being in the active time within a time for the scheduled sidelink communication resource, the first terminal does not use the scheduled sidelink communication resource, and sends the indication information configured to indicate not using the sidelink communication resource to the network device. After the network device receives the indication information indicating not using the sidelink communication resource, continuously scheduling the sidelink communication resource within the inactive time of the second terminal can be avoided, and the waste of resources can be avoided.

In the related art, in the dynamic scheduling manner for allocating the sending resource, the network device sends downlink control information (DCI) to the terminal. The DCI carries a hybrid automatic repeat request (HARQ) process ID and a sidelink sending resource, to indicate a time frequency position. The sidelink terminal uses a corresponding sidelink sending resource after receiving the DCI. A sidelink HARQ may be performed in a process of performing sidelink communication using the corresponding sidelink sending resource. In the related art, the sidelink HARQ process ID is bound to an HARQ process ID carried in the DCI, so that the network device determines the sidelink communication resource corresponding to the sidelink HARQ process ID is a resource corresponding to the HARQ process ID scheduled by the network device.

In an implementation of the embodiments of the disclosure, the indication information sent by the first terminal includes the HARQ process ID. The HARQ process ID included in the indication information is an HARQ process ID included in DCI scheduling the sidelink communication resource not used by the first terminal, so that the network device stops an inactive timer, which avoids prolonging a duration of the inactive timer.

In the embodiments of the disclosure, the HARQ process ID may be indicated by a bit map. That is, the indication information may include a bit map for indicating the HARQ process ID, which is referred to as a first bit map. There is a corresponding relationship between a bit in the first bit map and the HARQ process ID.

Each bit in the first bit map is configured to indicate one HARQ process ID. The bit value after setting the bit in the first bit map is configured to indicate the unused sidelink communication resource. In an example, the bit in the first bit map may be set to 0 or 1. In an example, the bit in the first bit map is set to 0 or 1, which indicates that the sidelink communication resource scheduled by DCI carrying a corresponding HARQ process ID is not used.

It may be understood that, in the embodiments of the disclosure, there may be one or more sidelink communication resources not used by the terminal. When there are a plurality of unused sidelink communication resources, the first bit map includes a plurality of bits, and the plurality of bits may be set to 0 or 1, to indicate the unused sidelink communication resources.

In the embodiments of the disclosure, the indication information configured to indicate the unused sidelink communication resource and carrying the HARQ process ID may be carried in a medium access control (MAC) control element (CE), or may be carried in uplink control information (UCI), or may be carried in a radio resource control (RRC) message.

In another implementation, the indication information configured to indicate the unused sidelink communication resource is further configured to indicate a retransmission position corresponding to the unused sidelink communication resource. There is a corresponding relationship between the retransmission position and a retransmission number of times. That is, the retransmission position indicated by the indication information may indicate the number of retransmissions performed by the terminal.

In an implementation, the retransmission position may be indicated by a bit map. The bit map for indicating the retransmission position is referred to as a second bit map. There is a corresponding relationship between a bit in the second bit map and the retransmission position. A bit value after setting the bit in the second bit map is configured to indicate the retransmission position.

In the embodiments of the disclosure, the indication information configured to indicate the unused sidelink communication resource and carrying the retransmission position corresponding to the unused sidelink communication resource may be carried in the MAC CE, or may be carried in the UCI, or may be carried in the RRC message.

In the related art, the network device may configure a physical uplink control channel (PUCCH) for the scheduled sidelink communication resource, to perform an HARQ feedback for a sidelink.

In an implementation, in response to the network device configuring the PUCCH for the scheduled sidelink communication resource, in a case that the scheduled sidelink communication resource is not used, the first terminal sends to the network device an HARQ acknowledgment (ack) feedback for a data transmission based on the unused sidelink communication resource, to avoid that the network device performs the retransmission on data transmitted on the sidelink communication resource.

In an implementation, in response to the network device configuring the PUCCH for the scheduled sidelink communication resource, in a case that the scheduled sidelink communication resource is not used, the first terminal performs an initial transmission of data based on the unused sidelink communication resource, and the first terminal sends an HARQ ack feedback for a data transmission based on the scheduled and unused sidelink communication resource.

In an implementation, in response to the network device configuring the PUCCH for the scheduled sidelink communication resource, in a case that the scheduled sidelink communication resource is not used, the first terminal performs a retransmission of data based on the unused sidelink communication resource, and sends an HARQ negative-acknowledgment (nack) feedback for a data transmission based on the scheduled and unused sidelink communication resource.

In the method for sidelink communication according to embodiments of the disclosure, in response to the first terminal determining there is no second terminal being in the active time within a time of the sidelink communication resource scheduled by the network device, the first terminal does not use the sidelink communication resource scheduled by the network device, and the first terminal sends the indication information configured to indicate not using the sidelink communication resource to the network device. The network device receives the indication information sent by the first terminal, and waits for a next active time of the second terminal, and schedules a sidelink communication resource within the next active time of the second terminal. The first terminal receives the sidelink communication resource scheduled by the network device within the next active time.

In embodiments of the disclosure, in sidelink TRX, the first terminal receives the sidelink communication resource scheduled by the network device and sends the indication information configured to indicate not using the sidelink communication resource to the network device, so that the network device can accurately determine the use condition of the sidelink communication resource scheduled for the sidelink communication terminal, further to perform accurate scheduling, and avoid a waste of resources.

In embodiments of the disclosure, in response to the first terminal determining that there is a second terminal being in an active time among second terminals performing sidelink communication with the first terminal, the first terminal sends sidelink communication data to the second terminal within the active time using the sidelink communication resource scheduled by the network device. The indication information sent by the first device to the network device is configured to indicate resource information of using the sidelink communication resource.

FIG. 4 is a flowchart illustrating a method for sidelink communication according to an example embodiment. As illustrated in FIG. 4, the method for sidelink communication is applied in a first terminal, and includes following steps.

At step S31, a sidelink communication resource scheduled by a network device is received.

At step S32, in response to determining that there is a second terminal being in an active time among second terminals performing sidelink communication with the first terminal, the sidelink communication resource scheduled by the network device is used.

In embodiments of the disclosure, there is a second terminal being in the active time among the second terminals performing the sidelink communication with the first terminal, which may be understood that there is at least one second terminal being in the active time within a time during which the sidelink communication resource scheduled by the network device performs data transmission.

At step S33, indication information is sent, the indication information is configured to indicate resource information of using the sidelink communication resource.

In embodiments of the disclosure, the first terminal determines there is a second terminal in the active time within a time during which the sidelink communication resource scheduled by the network device performs data transmission, and sends the resource information of using the sidelink communication resource to the network device, so that the network device reasonably schedules the scheduled sidelink communication resource based on the resource information.

In an implementation, the resource information indicated by the indication information sent by the first terminal to the network device includes at least one of A, B or C.

### A: an ID of a layer 2 of the second terminal.

The resource information indicated by the indication information sent by the first terminal to the network device includes the ID of the layer 2 of the second terminal, so that the network device may accurately determine a target terminal with which the first terminal performs communication using the scheduled sidelink communication resource.

### B: a logical channel corresponding to sidelink communication data sent.

The resource information indicated by the indication information sent by the first terminal to the network device includes the logical channel corresponding to the sidelink communication data, so that the network device may schedule a resource within a reasonable time.

### C: starting by the first terminal a sidelink HARQ feedback, or not starting by the first terminal a sidelink HARQ feedback.

The resource information indicated by the indication information sent by the first terminal to the network device includes the first terminal starting or not starting the sidelink HARQ feedback, so that the network device may clarify a transmission condition of a sidelink and starts a retransmission reasonably.

In an implementation, in a case that the network device receives the indication information configured to indicate the used sidelink communication resource sent by the terminal, the network device may determine an active time of the second device based on the resource information, and schedule a sidelink communication resource within the active time determined. The first terminal receives the sidelink communication resource scheduled by the network device within the active time determined based on the resource information.

In embodiments of the disclosure, in a case that the first terminal sends sidelink communication data to the second terminal being in the active time using the sidelink communication resource scheduled by the network device, the first device sends the indication information configured to indicate the corresponding resource information of using the sidelink communication resource to the network device, so that the network device can reasonably schedule the sidelink communication resource based on the indication information.

In the method for sidelink communication according to the embodiments of the disclosure, the first terminal receives the sidelink communication resource scheduled by the network device, and sends the indication information about using or not using the sidelink communication resource to the network device, to avoid that the network device wrongly schedules the scheduled sidelink communication resource. For example, scheduling the unused sidelink communication resource within the inactive time is avoided, and further a waste of resources is avoided.

Based on the same conception, a method for sidelink communication applied to a network device is further provided according to the embodiments of the disclosure.

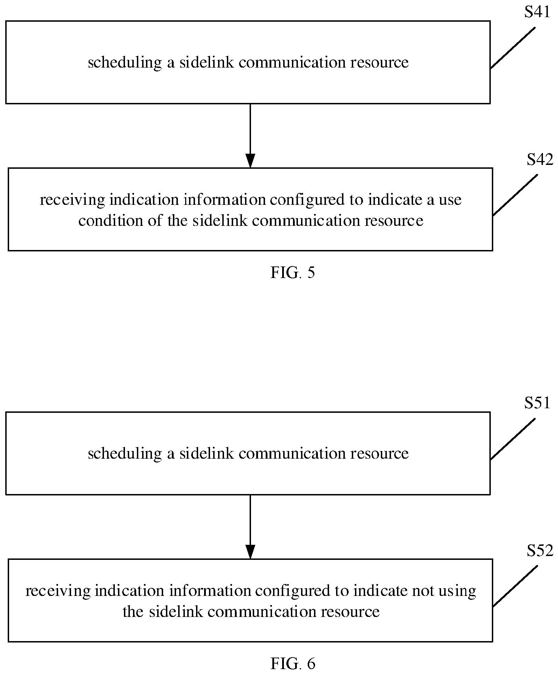

FIG. 5 is a flowchart illustrating a method for sidelink communication according to an example embodiment. As illustrated in FIG. 5, the method for sidelink communication is applied in a network device, and includes following steps.

At step S41, a sidelink communication resource is scheduled.

At step S42, indication information is received, the indication information is configured to indicate a use condition of the sidelink communication resource.

In embodiments of the disclosure, the network device schedules the sidelink communication resource, and receives the indication information configured to indicate the use condition of the sidelink communication resource sent by the terminal, so that, based on the indication information, the network device performs accurate scheduling based on the use condition of the sidelink communication resource, which avoids that the network device wrongly schedules the scheduled sidelink communication resource.

The use condition of the sidelink communication resource includes using or not using the scheduled sidelink communication resource.

In an implementation, the indication information is configured to indicate a sidelink communication resource not used by the terminal.

FIG. 6 is a flowchart illustrating a method for sidelink communication according to an example embodiment. As illustrated in FIG. 6, the method for sidelink communication is applied in a network device, and includes following steps.

At step S51, a sidelink communication resource is scheduled.

At step S52, indication information configured to indicate not using the sidelink communication resource is received.

In embodiments of the disclosure, when the indication information is configured to indicate the terminal does not use the sidelink communication resource, the indication information includes an HARQ process ID. The HARQ process ID is an HARQ process ID included in DCI scheduling the sidelink communication resource not used by the first terminal. The indication information includes the HARQ process ID, so that the network device stops an inactive timer, which avoids prolonging a duration of the inactive timer.

In an implementation, in the embodiments of the disclosure, the HARQ process ID may be indicated by a bit map. That is, the indication information may include a first bit map for indicating the HARQ process ID. There is a corresponding relationship between a bit in the first bit map and the HARQ process ID.

Each bit in the first bit map is configured to indicate one HARQ process ID. The bit value after setting the bit in the first bit map is configured to indicate the unused sidelink communication resource. In an example, the bit in the first bit map may be set to 0 or 1. In an example, the bit in the first bit map is set to 0 or 1, which indicates that the sidelink communication resource scheduled by the DCI carrying a corresponding HARQ process ID is not used.

It may be understood that, in the embodiments of the disclosure, there may be one or more sidelink communication resources not used by the terminal. When there are a plurality of unused sidelink communication resources, the first bit map includes a plurality of bits, and the plurality of bits may be set to 0 or 1, to indicate the unused sidelink communication resources.

In an implementation, the indication information is further configured to indicate a retransmission position corresponding to unused sidelink communication resource, and there is a corresponding relationship between the retransmission position and a retransmission number of times. The retransmission position indicated by the indication information may indicate the number of retransmissions performed by the terminal.

In an implementation, the indication information includes a second bit map, and the retransmission position may be indicated by the second bit map. There is a corresponding relationship between a bit in the second bit map and a retransmission position. A bit value after setting the bit in the second bit map is configured to indicate the retransmission position.

In the embodiments of the disclosure, the network device may configure a PUCCH for the scheduled sidelink communication resource. In response to the network device configuring the PUCCH for the scheduled sidelink communication resource, the network device receives an HARQ ack feedback from the terminal for a data transmission based on the scheduled sidelink communication resource, to avoid that the network device schedules the sidelink communication resource to perform a retransmission on data.

In an implementation, in response to the network device configuring the PUCCH for the scheduled sidelink communication resource, in a case that the scheduled sidelink communication resource is not used, the first terminal performs an initial data transmission based on the unused sidelink communication resource, the network device may receive an HARQ ack feedback from the terminal for an initial data transmission based on the sidelink communication resource.

In an implementation, in response to the network device configuring the PUCCH for the scheduled sidelink communication resource, in a case that the scheduled sidelink communication resource is not used, the first terminal performs a data retransmission based on the unused sidelink communication resource, the network device receives an HARQ nack feedback from the terminal for a data retransmission based on the sidelink communication resource.

In an implementation, when the network device receives the indication information configured to indicate not using the sidelink communication resource sent by the first terminal, the network device waits for a next active time of the second terminal, and schedules a sidelink communication resource within the next active time of the second terminal.

In an implementation, the indication information received by the network device is configured to indicate resource information of using the sidelink communication resource.

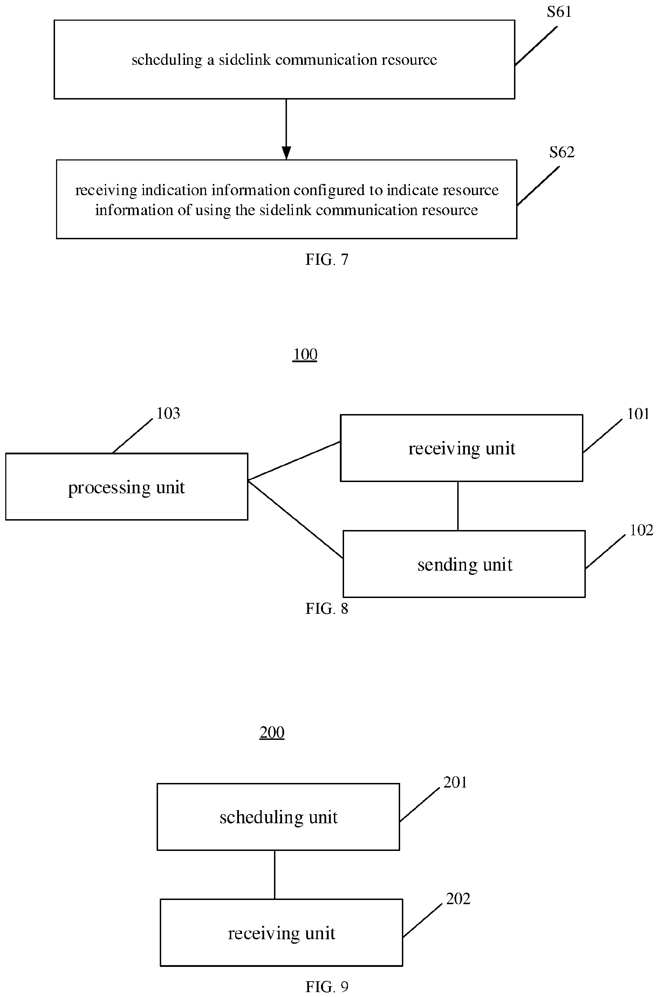

FIG. 7 is a flowchart illustrating a method for sidelink communication according to an example embodiment. As illustrated in FIG. 7, the method for sidelink communication is applied in a network device, and includes following steps.

At step S61, a sidelink communication resource is scheduled.

At step S62, indication information configured to indicate resource information of using the sidelink communication resource is received.

In embodiments of the disclosure, there is a second terminal being in the active time within a time during which the sidelink communication resource scheduled by the network device performs data transmission, and the network device receives the indication information configured to indicate resource information on using the sidelink communication resource, so that the network device reasonably schedules the scheduled sidelink communication resource based on the resource information.

In an implementation, the resource information indicated by the indication information received by the network device includes at least one of A, B or C.

### A: an ID of a layer 2 of the second terminal.

The resource information indicated by the indication information received by the network device includes the ID of the layer 2 of the second terminal, so that the network device may accurately determine a target terminal with which the first terminal performs communication using the scheduled sidelink communication resource.

### B: a logical channel corresponding to sidelink communication data sent.

The resource information indicated by the indication information received by the network device includes the logical channel corresponding to the sidelink communication data, so that the network device may schedule a resource within a reasonable time.

### C: starting by the first terminal a sidelink HARQ feedback, or not starting by the first terminal a sidelink HARQ feedback.

The resource information indicated by the indication information received by the network device includes the first terminal starting or not starting the sidelink HARQ feedback, so that the network device clarifies a transmission condition of the sidelink and starts the retransmission reasonably.

In an implementation, in a case that the network device receives the indication information configured to indicate the used sidelink communication resource sent by the terminal, the network device may determine an active time of the second device based on the resource information, and schedule a sidelink communication resource within the active time determined.

In an implementation, in a case that the network device receives the indication information configured to indicate the used sidelink communication resource sent by the terminal, the network device may determine the active time of the second device based on the resource information, and schedule a sidelink communication resource within the active time determined based on the resource information, to perform resource scheduling more reasonably.

It may be understood that, the method for sidelink communication according to the embodiments of the disclosure is applicable to an interaction between the first terminal and the second terminal, an interaction between the first terminal and the network device, or an interaction among the first terminal, the second terminal and the network device to achieve sidelink communication. In an implementation, the first terminal, the second terminal and/or the network device possess functions achieving the above implementation solution, which may refer to descriptions of the above embodiments, which will not be repeated here.

It needs to be noted that, those skilled in the art may understand that various implementations/embodiments involved in the embodiments of the present disclosure may be used in combination with the above embodiments, and may be independently used. Whether independently used or used in combination with the above embodiments, the implementation principle is similar. In the embodiments of the present disclosure, part of embodiments are illustrated by the implementations used together. It may be understood by those skilled in the art that the examples are not a limitation of the embodiments of the present disclosure.

Based on the same conception, an apparatus for sidelink communication is further provided according to embodiments of the present disclosure.

It may be understood that, the apparatus for sidelink communication provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of hardware or a combination of hardware and computer software. Whether a certain function is executed by hardware or computer software driving hardware depends on specific applications and design constraints of the technical solution. Those skilled in the art may adopt different methods for each specific application to implement the described functions, but such implementation should not be considered as beyond the scope of the technical solutions in embodiments of the present disclosure.

FIG. 8 is a block diagram illustrating an apparatus for sidelink communication according to an example embodiment. As illustrated in FIG. 8, an apparatus 100 for sidelink communication is applied to a first terminal, and includes a receiving unit 101 and a sending unit 102.

The receiving unit 101 is configured to receive a sidelink communication resource scheduled by a network device. The sending unit 102 is configured to send indication information configured to indicate a use condition of the sidelink communication resource.

In an implementation, the apparatus 100 for sidelink communication further includes a processing unit 103. The processing unit 103 is configured to: in response to determining that there is no second terminal being in an active time among second terminals performing sidelink communication with the first terminal, not use the sidelink communication resource. The indication information is configured to indicate not using the sidelink communication resource.

In an implementation, indication information includes an HARQ PROCESS ID. The HARQ PROCESS ID is an HARQ PROCESS ID included in downlink control information (DCI) scheduling an unused sidelink communication resource.

In an embodiment, the indication information includes a first bit map. There is a corresponding relationship between a bit in the first bit map and the HARQ PROCESS ID. A bit value after setting the bit in the first bit map is configured to indicate the unused sidelink communication resource.

In an implementation, the indication information is further configured to indicate a retransmission position corresponding to the unused sidelink communication resource. There is a corresponding relationship between the retransmission position and a retransmission number of times.

In an embodiment, the indication information includes a second bit map. There is a corresponding relationship between a bit in the second bit map and a retransmission position. A bit value after setting the bit in the second bit map is configured to indicate the retransmission position.

In an implementation, the sending unit 102 is further configured to: in response to the network device configuring a physical uplink control channel (PUCCH) for the sidelink communication resource, send an HARQ acknowledgement feedback for a data transmission based on the sidelink communication resource.

In an implementation, the sending unit is 102 further configured to: in response to the network device configuring a physical uplink control channel (PUCCH) for the sidelink communication resource, and in response to performing an initial transmission based on the sidelink communication resource, send an HARQ acknowledgement feedback for a data transmission based on the sidelink communication resource.

In an implementation, the sending unit is 102 further configured to: in response to the network device configuring a physical uplink control channel (PUCCH) for the sidelink communication resource, and in response to performing a retransmission based on the sidelink communication resource, send an HARQ negative acknowledgement feedback for a data transmission based on the sidelink communication resource.

In an implementation, the receiving unit is 101 further configured to: receive a sidelink communication resource scheduled by the network device within a next active time.

In an implementation, the sending unit is 102 further configured to: in response to determining that there is a second terminal being in an active time among second terminals performing sidelink communication with the first terminal, send sidelink communication data to the second terminal being in the active time using the sidelink communication resource. The indication information is configured to indicate resource information of using the sidelink communication resource.

In an implementation, the resource information includes at least one of:

an ID of a layer 2 of a second terminal; a logical channel corresponding a communication data sent; or starting by the first terminal a sidelink communication HARQ feedback, or not starting by the first terminal a sidelink communication HARQ feedback.

In an implementation, the receiving unit 101 is further configured to: receive a sidelink communication resource scheduled by the network device within the active time determined based on the resource information.

FIG. 9 is a block diagram illustrating an apparatus for sidelink communication according to an example embodiment. As illustrated in FIG. 9, an apparatus 200 for sidelink communication is applied to a network device, and includes a scheduling unit 201 and a receiving unit 202.

The scheduling unit 201 is configured to schedule a sidelink communication resource. The receiving unit 202 is configured to receive indication information configured to indicate a use condition of the sidelink communication resource.

In an implementation, the indication information is configured to indicate a sidelink communication resource not used by a terminal.

In an implementation, the indication information includes an HARQ PROCESS ID. The HARQ PROCESS ID is an HARQ PROCESS ID included in downlink control information (DCI) scheduling an unused sidelink communication resource.

In an embodiment, the indication information includes a first bit map. There is a corresponding relationship between a bit in the first bit map and the HARQ PROCESS ID. A bit value after setting the bit in the first bit map is configured to indicate the unused sidelink communication resource.

In an implementation, the indication information is further configured to indicate a retransmission position corresponding to the unused sidelink communication resource. There is a corresponding relationship between the retransmission position and a retransmission number of times.

In an embodiment, the indication information includes a second bit map. There is a corresponding relationship between a bit in the second bit map and a retransmission position. A bit value after setting the bit in the second bit map is configured to indicate the retransmission position.

In an implementation, the receiving unit 202 is further configured to: in response to configuring a physical uplink control channel (PUCCH) for the sidelink communication resource, receive an HARQ acknowledgement feedback from the terminal for a data transmission based on the sidelink communication resource.

In an implementation, the receiving unit 202 is further configured to: in response to configuring a physical uplink control channel (PUCCH) for the sidelink communication resource, receive an HARQ acknowledgement feedback from the terminal for an initial data transmission based on the sidelink communication resource.

In an implementation, the receiving unit is 202 is further configured to: in response to configuring a physical uplink control channel (PUCCH) for the sidelink communication resource, receive an HARQ negative acknowledgement feedback that the terminal performs a data retransmission based on the sidelink communication resource.

In an implementation, the scheduling unit 201 is further configured to: schedule a sidelink communication resource within a next active time.

In an implementation, the indication information is configured to indicate resource information of using the sidelink communication resource.

In an implementation, the resource information includes at least one of:
an ID of a layer 2 of a second terminal; a logical channel corresponding a communication data sent; or starting by the first terminal a sidelink communication hybrid automatic repeat request (HARQ) feedback, or not starting by the first terminal a sidelink communication HARQ feedback.

In an implementation, the scheduling unit 201 is further configured to: determine an active time based on the resource information; and schedule a sidelink communication resource within the active time determined based on the resource information.

With regards to the apparatus in the above embodiments, the specific way in which each module performs the operation has been described in embodiments of the method and will not be elaborated here.

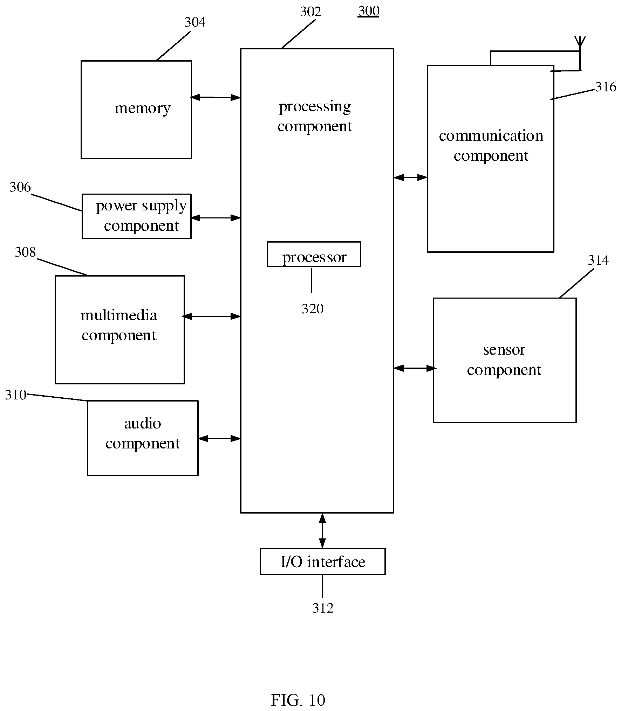

FIG. 10 is a block diagram illustrating a device 300 for sidelink communication according to an example embodiment. The device 300 may be provided as a first terminal involved in the above embodiments. For example, the device 300 may be a mobile phone, a computer, a digital broadcasting terminal, a messaging device, a game console, a tablet device, a medical equipment, a fitness equipment, a personal digital assistant, etc.

As illustrated in FIG. 10, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing unit 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Every front camera and rear camera may be a fixed optical lens system or an optical lens system with focal length and optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication units 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as a CMOS or CCD image sensor, which is configured to use in imaging applications. In some embodiments, the sensor units 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on communication standard, such as WiFi, 2G or 3G, or their combination. In an exemplary embodiment, the communication component 316 receives broadcast signals or broadcast-related information from an external broadcast management system via a broadcast channel. In an example embodiment, the communication component 316 further includes a near field communication (NFC) module to facilitate short-range communication. For example, the NFC module may be implemented based on a radio frequency identification (RFID) technology, an infrared data association (IRDA) technology, an ultra-wideband (UWB) technology, bluetooth (BT) technology and other technologies.

In an example embodiment, the device 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-transitory computer-readable storage medium including instructions is further provided, such as the memory 304 including instructions. The instructions may be executed by the processor 320 of the device 300 to complete the above methods. For example, the non-transitory computer readable storage medium may be a ROM, a random access memory (RAM), a CD-ROM, a magnetic tape, a floppy disk, an optical data storage device, etc.

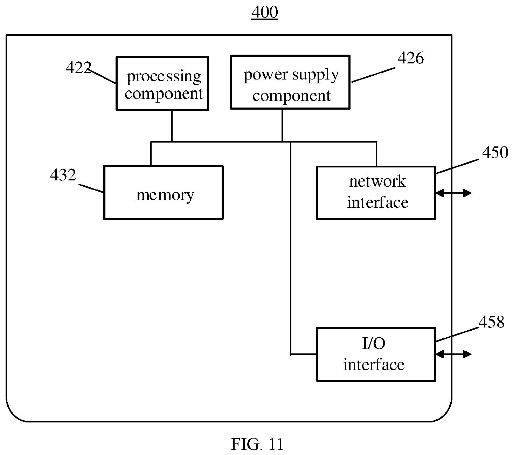

FIG. 11 is a block diagram illustrating a device 400 for sidelink communication according to an example embodiment. For example, the device 400 may be provided as a network device. As illustrated in FIG. 11, the device 400 includes a processing component 422, which further includes one or more processors, and memory resources represented by a memory 432, which are configured to store instructions executable by the processing component 422, for example, an application. The application stored in the memory 432 may include one or more modules each of which corresponds to a set of instructions. In addition, the processing component 422 is configured to execute instructions, to perform the above method.

The device 400 may further include one power supply component 426 configured to execute power management of the device 400, and one wired or wireless network interface 450 configured to connect the device 400 to a network, and one input/output(I/O) interface 458. The device 400 may operate an operating system stored in the memory 432, for example, Windows ServerTM, Mac OS XTM, UnixTM, LinuxTM, and FreeBSDTM.

In an example embodiment, the device 400 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-transitory computer-readable storage medium including instructions is further provided, for example, the memory 432 including instructions. The instructions may be executed by the processing component 422 of the device 400 to complete the above methods. For example, the non-transitory computer readable storage medium may be a ROM, a random access memory (RAM), a CD-ROM, a magnetic tape, a floppy disk, an optical data storage device, etc.

It may be further understood that, "a plurality of' in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "f' generally means the contextual object is a kind of "or" relationship. The singular forms "a", "an" and "this" are also intended to include plural forms, unless the context clearly indicates otherwise.

It should be understood that, the terms "first", "second", etc. are configured to describe various information, but the information shall not be limited to the terms. The terms are only used to distinguish the same category of information, rather than indicate a particular order or degree of importance. Actually, the terms "first", "second", etc. may be completely used interchangeably. For example, subject to the scope of this present disclosure, first information may also be referred to as second information, and similarly, and second information may also be referred to as first information.

It may be further understood that, in the embodiments of the disclosure, although operations are described in a particular order in attached drawings, it should not be construed as requiring that the operations be performed in a particular or serial order as shown, or that the operations shown be performed in their entirety to obtain a desired result. In a certain environment, multitasking and parallel processing may be advantageous.

After considering the specification and practicing the disclosure here, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure.

It should be understood that the present disclosure is not limited to the precise structure described above and shown in the drawings, and various modifications and changes may be made without departing from its scope. The scope of the present application is only limited by the appended claims. Range of the present disclosure is only limited by the appended claims.

## Claims

1. A method for sidelink communication, applied to a first terminal, comprising:
receiving a sidelink communication resource scheduled by a network device; and
sending indication information configured to indicate a use condition of the sidelink communication resource.

2. The method according to claim 1, further comprising:
in response to determining that there is no second terminal being in an active time among second terminals performing sidelink communication with the first terminal, not using the sidelink communication resource;
wherein the indication information is configured to indicate not using the sidelink communication resource.

3. The method according to claim 2, wherein the indication information comprises a hybrid automatic repeat request (HARQ) process ID;
wherein the HARQ process ID is an HARQ process ID comprised in downlink control information (DCI) scheduling the unused sidelink communication resource.

4. The method according to claim 2 or 3, wherein the indication information comprises a first bit map, and there is a corresponding relationship between a bit in the first bit map and the HARQ process ID; and
a bit value after setting the bit in the first bit map is configured to indicate the unused sidelink communication resource.

5. The method according to claim 3, wherein the indication information is further configured to indicate a retransmission position corresponding to the unused sidelink communication resource, and there is a corresponding relationship between the retransmission position and a retransmission number of times.

6. The method according to claim 5, wherein the indication information comprises a second bit map, and there is a corresponding relationship between a bit in the second bit map and the retransmission position; and
a bit value after setting the bit in the second bit map is configured to indicate the retransmission position.

7. The method according to claim 2, further comprising:
in response to the network device configuring a physical uplink control channel (PUCCH) for the sidelink communication resource, sending an HARQ acknowledgment feedback for a data transmission based on the sidelink communication resource.

8. The method according to claim 2, further comprising:
in response to the network device configuring a physical uplink control channel (PUCCH) for the sidelink communication resource, and in response to performing an initial transmission based on the sidelink communication resource, sending an HARQ acknowledgment feedback for a data transmission based on the sidelink communication resource.

9. The method according to claim 2, further comprising:
in response to the network device configuring a physical uplink control channel (PUCCH) for the sidelink communication resource and in response to performing a retransmission based on the sidelink communication resource, sending an HARQ negative acknowledgement feedback for a data transmission based on the sidelink communication resource.

10. The method according to claim 2, further comprising:
receiving a sidelink communication resource scheduled by the network device within a next active time.

11. The method according to claim 1, further comprising:
in response to determining that there is a second terminal being in an active time among second terminals performing sidelink communication with the first terminal, sending sidelink communication data to the second terminal being in the active time using the sidelink communication resource;
wherein the indication information is configured to indicate resource information of using the sidelink communication resource.

12. The method according to claim 11, wherein the resource information comprises at least one of:
an ID of a layer 2 of the second terminal;
a logical channel corresponding to the sidelink communication data sent; or
starting by the first terminal a sidelink communication HARQ feedback, or not starting by the first terminal a sidelink communication HARQ feedback.

13. The method according to claim 11 or 12, further comprising:
receiving a sidelink communication resource scheduled by the network device within the active time determined based on the resource information.

14. A method for sidelink communication, applied to a network device, comprising:
scheduling a sidelink communication resource; and
receiving indication information configured to indicate a use condition of the sidelink communication resource.

15. The method according to claim 14, wherein the indication information is configured to indicate a sidelink communication resource not used by a terminal.

16. The method according to claim 15, wherein the indication information comprises a hybrid automatic repeat request (HARQ) process ID;
wherein the HARQ process ID is an HARQ process ID comprised in downlink control information (DCI) scheduling the unused sidelink communication resource.

17. The method according to claim 15 or 16, wherein the indication information comprises a first bit map, and there is a corresponding relationship between a bit in the first bit map and the HARQ process ID; and
a bit value after setting the bit in the first bit map is configured to indicate the unused sidelink communication resource.

18. The method according to claim 16, wherein the indication information is further configured to indicate a retransmission position corresponding to the unused sidelink communication resource, and there is a corresponding relationship between the retransmission position and a retransmission number of times.

19. The method according to claim 18, wherein the indication information comprises a second bit map, and there is a corresponding relationship between a bit in the second bit map and the retransmission position; and
a bit value after setting the bit in the second bit map is configured to indicate the retransmission position.

20. The method according to claim 15, further comprising:
in response to configuring a physical uplink control channel (PUCCH) for the sidelink communication resource, receiving an HARQ acknowledgement feedback from the terminal for a data transmission based on the sidelink communication resource.

21. The method according to claim 15, further comprising:
in response to configuring a physical uplink control channel (PUCCH) for the sidelink communication resource, receiving an HARQ acknowledgement feedback from the terminal for an initial data transmission based on the sidelink communication resource.

22. The method according to claim 15, further comprising:
in response to configuring a physical uplink control channel (PUCCH) for the sidelink communication resource, receiving an HARQ negative acknowledgement feedback from the terminal for a data retransmission based on the sidelink communication resource.

23. The method according to claim 15, further comprising:
scheduling a sidelink communication resource within a next active time.

24. The method according to claim 14, wherein the indication information is configured to indicate resource information of using the sidelink communication resource.

25. The method according to claim 24, wherein the resource information comprises at least one of:
an ID of a layer 2 of a second terminal;
a logical channel corresponding to the sidelink communication data sent; or
starting by a first terminal a sidelink communication HARQ feedback, or not starting by a first terminal a sidelink communication HARQ feedback.

26. The method according to claim 24 or 25, further comprising:
determining an active time based on the resource information; and
scheduling a sidelink communication resource within the active time determined based on the resource information.

27. An apparatus for sidelink communication, comprising:
a receiving unit, configured to receive a sidelink communication resource scheduled by a network device; and
a sending unit, configured to send indication information configured to indicate a use condition of the sidelink communication resource.

28. An apparatus for sidelink communication, comprising:
a scheduling unit, configured to schedule a sidelink communication resource; and
a receiving unit, configured to receive indication information configured to indicate a use condition of the sidelink communication resource.

29. A device for sidelink communication, comprising:
a processor; and
a memory for storing instructions executable by a processor;
wherein the processor is configured to perform the method for sidelink communication according to any one of claims 1 to 13.

30. A device for sidelink communication, comprising:
a processor; and
a memory for storing instructions executable by a processor;
wherein the processor is configured to perform the method for sidelink communication according to any one of claims 14 to 26.

31. A storage medium storing instructions, wherein when the instructions in the storage medium are executed by a processor of a terminal, the terminal is caused to perform the method for sidelink communication according to any one of claims 1 to 13.

32. A storage medium storing instructions, wherein when the instructions in the storage medium are executed by a processor of a network device, the network device is caused to perform the method for sidelink communication according to any one of claims 14 to 26.
